# EUROPÄISCHE PATENTSCHRIFT

(11) **EP 2 430 482 B1**
(45) Veröffentlichungstag und Bekanntmachung des Hinweises auf die Patenterteilung: **09.01.2013**
(21) Anmeldenummer: 10718990.4
(22) Anmeldetag: 11.05.2010
(51) Int. Cl.: G02B 1/11, G02B 1/12, C03B 27/04, C03C 15/00

(54) **VERFAHREN ZUR HERSTELLUNG EINER REFLEXIONSVERMINDERTEN SCHEIBE**
METHOD FOR PRODUCING A REFLECTION-REDUCED PANE
PROCÉDÉ PERMETTANT DE FABRIQUER UNE VITRE À RÉFLEXION RÉDUITE

(30) Priorität: 13.05.2009 DE 102009025788
(43) Veröffentlichungstag der Anmeldung: 21.03.2012
(73) Patentinhaber: Saint-Gobain Glass France, 92400 Courbevoie (FR)
(72) Erfinder: NEANDER, Marcus, 52249 Eschweiler (DE); JANSSEN, David, 47918 Tönisvorst (DE)
(74) Vertreter: Lendvai, Tomas
(86) Internationale Anmeldenummer: PCT/EP2010/056433
(87) Internationale Veröffentlichungsnummer: WO 2010/130722

(56) Entgegenhaltungen:
- DE-A1-102005 020 168
- DE-B- 1 214 839
- DE-C- 822 714
- DE-T2- 60 310 976
- US-A1- 2003 170 459
- PER NOSTELL: "Preparation and Optical Characterisation of Antireflection Coatings and Reflector Materials for Solar Energy Systems" COMPREHENSIVE SUMMARIES OF UPPSALA DISSERTATIONS FROM THE FACULTY OF SCIENCE AND TECHNOLOGY, UPPSALA UNIVERSITET, ACTA UNIVERSITATIS UPSALIENSIS, UPPSALA, SW, 31. Dezember 2000 (2000-12-31), Seiten 1-68, XP007913461 ISSN: 1104-232X

## Beschreibung

Die Erfindung betrifft ein Verfahren zur Herstellung einer reflexionsverminderten Scheibe, eine mithilfe des erfindungsgemäßen Verfahrens hergestellte Scheibe und deren Verwendung.

Viele Scheiben zeigen neben der in vielen Fällen gewünschten hohen optischen Transparenz auch starke Lichtreflexionen. Trifft Licht auf eine Grenzfläche von Medien mit unterschiedlichen Brechungsindizes, so wird ein Teil des einfallenden Lichts reflektiert. In Abhängigkeit von der Lichtquelle, Wellenlänge und dem Einstrahlwinkel können diese Reflexionen beträchtlich sein. Beispielsweise können Sonnenlichtreflexionen an Gebäuden oder vorausfahrenden Fahrzeugen andere Verkehrsteilnehmer blenden. Auch in der Photovoltaik sind Lichtreflexionen in der Regel unerwünscht, da diese die Lichtmenge auf der Photozellenoberfläche reduzieren. Mit der reduzierten Lichtmenge vermindert sich in vielen Fällen auch der Wirkungsgrad der Solarzelle.

Grundsätzlich werden mehrere Verfahren zur Reflexionsverminderung von Scheiben in der Praxis angewandt. Die Reflexionsverminderung von Scheiben basiert in vielen Fällen auf der Erzeugung einer porösen, strukturierten Schicht auf der Glasoberfläche. Diese poröse, strukturierte Schicht kann durch Ätzen mit einer geeigneten Säure oder Base erzeugt werden. Eine andere Möglichkeit ist die Erzeugung einer porösen SiO₂-Schicht durch Abscheidung von SiO₂ auf der Glasoberfläche, beispielsweise in einem Sol-Gel-Verfahren. Prinzipiell sind auch Kombinationen der beiden Verfahren Ätzen und Abscheiden möglich.

Aufgrund der mechanischen Stabilität des Glases sind die Verfahren zur Reflexionsverminderung in der Regel erst nach den Vorspann- und Biegeprozessen möglich. Damit können in der Regel nur zugeschnittene Scheibensegmente und damit eine begrenzte Zahl von Scheiben gleichzeitig geätzt werden.

US 2,486,431 A offenbart ein Verfahren zur Erzeugung einer schwach reflektierenden Glasoberfläche. Die Glasoberfläche wird mit einer H₂SiF₆-Lösung geätzt. In Abhängigkeit von der Dauer des Ätzvorgangs wird die Glasoberfläche im unterschiedlichen Maße abgetragen und damit die optischen Eigenschaften der Oberfläche eingestellt und variiert.

DE 822 714 B offenbart ein Verfahren zur Herstellung eines reflexionsvermindernden Films auf der Oberfläche eines Glasgegenstandes. Dazu wird der Glasgegenstand in eine Lösung aus H₂SiF₆ und kolloidal-gelösten SiO₂ getaucht. In Abhängigkeit von der F⁻ und SiO₂ Konzentration wird die Scheibenoberfläche abgetragen (geätzt) und/oder aufgebaut.

US 4,019,884 A offenbart ein Verfahren zur Herstellung einer reflexionsverminderten Schicht auf einem Glassubstrat. Das Verfahren beinhaltet ein Erwärmen bei einer Temperatur von 630 °C bis 660 °C. Das Glas wird anschließend in einer wässerigen Flusssäure geätzt.

DE 196 42 419 A1 offenbart ein Verfahren zur Herstellung einer Antireflexionsbeschichtung. In dem Verfahren wird eine organische Siliciumverbindung in einem Sol-Gel Verfahren auf der Glasoberfläche aufgebracht. Ein hydrophiles, kolloidal-gelöstes Polymer oder ein Lösungsmittel werden bevorzugt als Katalysator zugesetzt.

DE 199 18 811 A1 offenbart ein vorgespanntes Sicherheitsglas mit einer wischfesten porösen SiO₂-Antireflexschicht. Die Herstellung des Sicherheitsglases erfolgt in einem ersten Schritt durch Beschichtung des Glases mit einer kolloid-dispersen Lösung. Das Glas der beschichteten Scheibe wird auf mindestens 600 °C erwärmt und anschließend thermisch abgeschreckt.

Die Aufgabe der Erfindung liegt darin, ein Verfahren zum Ätzen und Vorspannen von Scheiben bereitzustellen, das eine zeit- und kosteneffiziente Ätzung von großflächigen Scheiben vor dem Vorspannprozess ermöglicht.

Die Aufgabe der vorliegenden Erfindung wird erfindungsgemäß durch ein Verfahren zur Herstellung einer reflexionsverminderten Scheibe, eine durch das Verfahren erhaltene Scheibe und deren Verwendung nach den unabhängigen Ansprüchen 1, 7 und 14 gelöst. Bevorzugte Ausführungen gehen aus den Unteransprüchen hervor.

Das Verfahren zur Herstellung einer reflexionsverminderten Scheibe umfasst in einem ersten Schritt das Ätzen einer Scheibe. Die Scheibe enthält bevorzugt Glas, besonders bevorzugt Flachglas (Floatglas), Quarzglas, Borosilikatglas und/oder Kalk-Natron-Glas.

Ätzen umfasst dabei im Sinne der Erfindung sowohl die Behandlung der Scheibenoberfläche mit einer Säure als auch mit einer Lauge. Diese beiden Schritte können in beliebiger Reihenfolge auch hintereinander erfolgen. Nach dem Ätzen oder bei unterschiedlichen Ätzlösungen wird die Scheibe bevorzugt mit entionisiertem Wasser gespült und/oder gereinigt. Es können sowohl alle (mehrere) Flächen der Scheibe geätzt werden, als auch nur eine Scheibenfläche.

Die geätzte Scheibe wird anschließend auf eine Temperatur von 500 °C bis 800 °C erwärmt. Dem Erwärmen der Scheibe schließt sich ein schnelles Abkühlen (Abschrecken) der erwärmten, geätzten Scheibe an. Dabei erkaltet die Oberfläche der Scheibe schneller als die Kernzone, so dass sich im Glas Spannungen bilden. Diese erhöhen die Stabilität und Festigkeit des Glases. Erwärmen und schnelles Abkühlung bilden zusammen den Vorspannprozess des erfindungsgemäßen Verfahrens. Die Scheibe wird innerhalb von 30 s bis 150 s mit einem kalten Luftstrahl, bevorzugt auf eine Temperatur von 25 °C bis 70 °C, besonders bevorzugt 35 °C bis 50 °C abgekühlt.

Das Ätzen erfolgt bevorzugt durch Aufbringen und/oder Aufsprühen einer Lösung einer Säure und/oder Base auf der Scheibenoberfläche.

Das Ätzen erfolgt bevorzugt durch Eintauchen der Scheibe in eine Lösung einer Säure und/oder Base.

Die Scheibe wird bevorzugt mit HF, H₂SiF₆, (SiO₂)ₘ*nH₂O (m, n = 0, 1, 2, 3, ....), HCl, H₂SO₄, H₃PO₄, HNO₃, CF₃COOH, CCl₃COOH, HCOOH, CH₃COOH, NaOH, KOH, Ca(OH)₂ und/oder Gemischen davon geätzt.

Die Scheibe wird bevorzugt in einem ersten Schritt mit einer HF oder NaOH-Lösung behandelt. Die Scheibe wird anschließend ein oder mehrmals mit entionisiertem Wasser gespült. Die eigentliche Ätzung der Scheibe erfolgt bevorzugt mit einer Lösung aus H₂SiF₆ und (SiO₂)ₘ*nH₂O. Die Konzentration an kolloidal-gelösten (SiO₂)ₘ*nH₂O beträgt bis zu 3 mmol über der (SiO₂)ₘ*nH₂O Sättigungskonzentration. Eine nähere Beschreibung findet sich hierzu in der DE 822 714 B.

Die geätzte Scheibe wird bevorzugt auf 550 °C bis 650 °C erwärmt.

Die erwärmte, geätzte Scheibe wird bevorzugt innerhalb von 50 s bis 90 s abgekühlt. Die Abkühlung erfolgt bevorzugt mit einem kalten Luftstrahl.

Die Erfindung beinhaltet des Weiteren eine nach dem erfindungsgemäßen Verfahren hergestellte reflexionsverminderte Scheibe. Die Scheibe umfasst mindestens einen Scheibenkörper und mindestens eine reflexionsverminderte Scheibenoberfläche.

Die Scheibenoberfläche weist bevorzugt eine Transmission (als Energietransmission nach DIN-EN 410:1998) von > 80 %, bevorzugt von > 90 % auf.

Die Scheibenoberfläche weist bevorzugt einen Brechungsindex von 1,20 bis 1,45, besonders bevorzugt von 1,25 bis 1,40 auf.

Die Schichtdicke der Scheibenoberfläche beträgt bevorzugt 10 nm bis 1000 nm, besonders bevorzugt 50 nm bis 200 nm.

Die Scheibenoberfläche enthält bevorzugt HF, H₂SiF₆, (SiO₂)ₘ*nH₂O, HCl, H₂O₄, H₃PO₄, HNO₃, CF₃COOH, CCl₃COOH, HCOOH, CH₃COOH, NaOH, KOH, Ca(OH)₂ und/oder Gemische davon.

Der Scheibenkörper weist bevorzugt eine Transmission von > 80 %, bevorzugt von > 90 %, auf.

Der Scheibenkörper weist bevorzugt eine Fläche von > 0,5 m², bevorzugt von > 5 m² und besonders bevorzugt von > 19 m² auf.

Die Erfindung beinhaltet des Weiteren die Verwendung der erfindungsgemäßen Scheibe als reflexionsverminderte Scheibe.

Die erfindungsgemäße Scheibe wird bevorzugt als Bauglas, Fahrzeugverglasung und/oder Photovoltaikverglasung verwendet.

Im Folgenden wird die Erfindung anhand von einer Zeichnung und eines Ausführungssowie Vergleichsbeispiels näher erläutert. Die Zeichnung ist eine rein schematische Darstellung und nicht maßstabsgetreu. Sie schränkt die Erfindung in keiner Weise ein.

Ein Ausführungsbeispiel der Erfindung ist in der Zeichnung dargestellt und wird im Folgenden näher beschrieben.

Es zeigen:
Figur 1 einen Querschnitt der erfindungsgemäßen, reflexionsveiminderten Scheibe (3),
Figur 2 ein Flugzeitsekundärionenspektrum (ToF-SIMS) (Cs₂F⁺/Fluor) der Scheibenoberfläche (1) einer eifindungsgemäßen Scheibe (3),
Figur 3 ein Flugzeitsekundärionenspektrum (ToF-SIMS) (Cs₂F⁺/Fluor) der Scheibenoberfläche (1) einer Vergleichsscheibe (3).

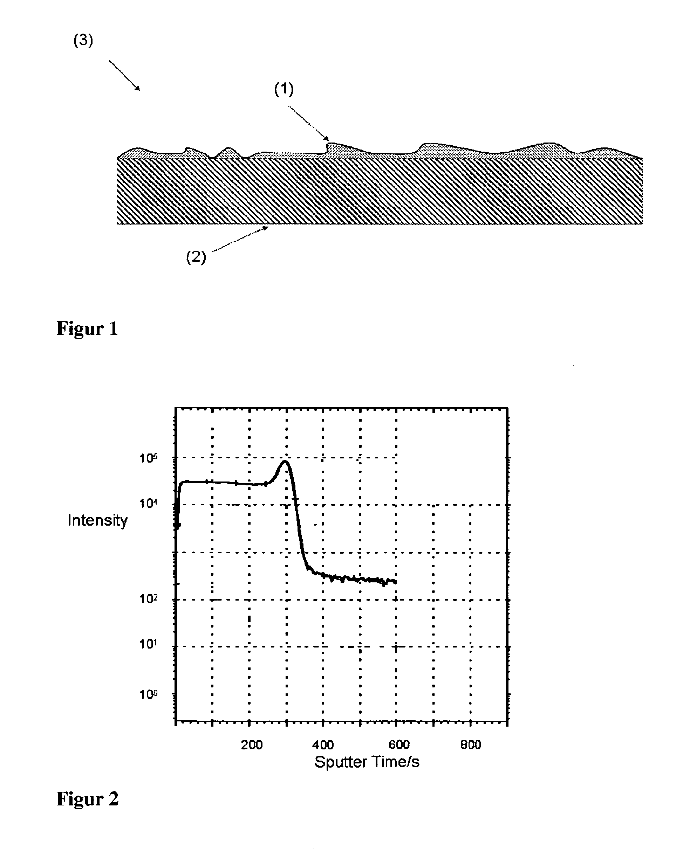

Figur 1 zeigt einen Querschnitt der erfindungsgemäßen, reflexionsverminderten Scheibe (3). Diese Scheibe beinhaltet einen transparenten Scheibenkörper (2) und eine reflexionsverminderte Scheibenoberfläche (1).

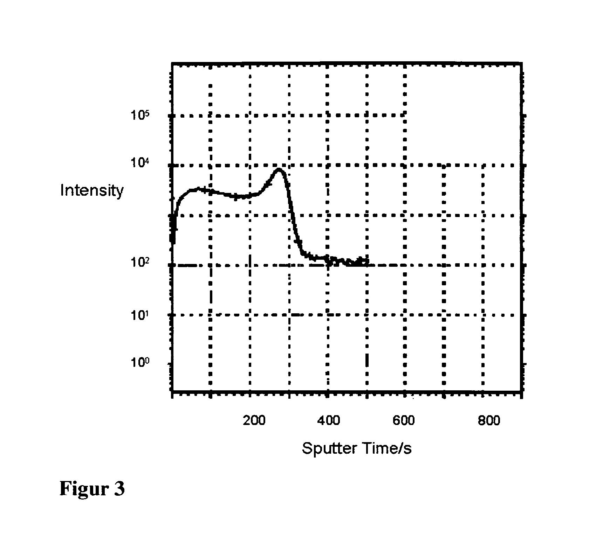

Figur 2 zeigt ein Flugzeitsekundärionenspektrum (ToF-SIMS) der Scheibenoberfläche (1) einer erfindungsgemäßen Scheibe (3) (Beispiel 1). Detektiert wurde das in der Scheibenoberfläche (1) gebundene Fluor als Cs₂F⁺. Das Maximum der relativen Intensität im Bereich der Scheibenoberfläche von 0 nm bis 150 nm, ist bei einer erfindungsgemäßen Scheibe (3) bevorzugt mindestens um den Faktor 5 höher als bei einer (sonst gleichen) vorgespannten und anschließend geätzten Scheibe (Figur 3). Die Scheibenoberfläche (1) wird dabei mit der Zeit (Sputter Time in s) abgetragen und die freigesetzten Ionen detektiert.

Figur 3 zeigt ein Flugzeitsekundärionenspektrum (ToF-SIMS) der Scheibenoberfläche (1) einer Vergleichsscheibe (Vergleichsbeispiel 2). Detektiert wurde das in der Scheibenoberfläche (1) gebundene Fluor als Cs₂F⁺. Die experimentellen Bedingungen entsprechen Figur 2.

Die Bezugszeichen bedeuten dabei:
(1) Scheibenoberfläche,
(2) Scheibenkörper,
(3) Scheibe.

Im Folgenden wird die Erfindung anhand eines Beispiels des erfindungsgemäßen Verfahrens und eines Vergleichsbeispiels näher erläutert.

In zwei Versuchsreihen wurde die relative Fluorkonzentration der Scheibenoberfläche (1) einer erfindungsgemäßen Scheibe (Beispiel 1) und einer Vergleichsscheibe (Vergleichsbeispiel 2) aus Kalk-Natron-Glas verglichen. In Sinne der Erfindung bezieht sich der Ausdruck "relative Fluorkonzentration" auf die Intensität des Cs₂F⁺ - Signals im ToF-SIMS Experiment. Über die Signalintensitäten lässt sich eine Aussage über das relative Konzentrationsverhältnis von Fluor in der Scheibenoberfläche (1) der erfindungsgemäßen Scheibe (3) (Beispiel 1) und der Vergleichsscheibe (3) (Vergleichsbeispiel 2) treffen.

### a) Beispiel 1 (erfindungsgemäß)

Die Scheibe wurde mit einer HF-Lösung (2 Gew. %) vorgeätzt, mit entionisiertem Wasser gespült und mit H₂SiF₆ (1,2 mol/l) für 30 min bis 120 min in einem Tauchbad geätzt. Die Scheibe wurde anschließend mit entionisiertem Wasser gespült und getrocknet. In einem zweiten Schritt wurde die Scheibe auf 600 °C erwärmt und innerhalb von 70 s im kalten Luftstrahl abgekühlt (Vorspannen).

Zur anschließenden Analyse und Detektion des Cs₂F⁺ Signals wurde ein IONTOF "TOF.SIMS 5" der ION-TOF (Tascon) GmbH (48149 Münster, Deutschland) eingesetzt. Zum Sputtern wurde ein Ionenstrahl aus Cs⁺ mit 1 keV, einem Strom von 100 nA auf einer Probenfläche von 300 x 300 µm² verwendet. Die Analyse erfolgte mit einem Ionenstrahl aus Bi₃⁺ mit 25 keV und einem Strom von 0,5 pA auf einer Fläche von 100 x 100 µm². Die Polarität war positiv. Das resultierende Spektrum ist in Figur 2 gezeigt.

### b) Vergleichsbeispiel 2

Die Vergleichsscheibe (3) unterscheidet sich vom erfindungsgemäßen Beispiel 1 dadurch, dass die Veraleichsscheibe vor dem Ätzen bei ca. 600 °C vorgespannt wurde und innerhalb von ca. 70 s im kalten Luftstrahl abgekühlt wurde. Das Ätzen erfolgte anschließend unter den gleichen Bedingungen wie in Beispiel 1.

Zur anschließenden Analyse und Detektion des Cs₂F⁺ Signals wurde ein IONTOF "TOF.SIMS 5" der ION-TOF (Tascon) GmbH (48149 Münster, Deutschland) eingesetzt. Zum Sputtern wurde ein Ionenstrahl aus Cs⁺ mit 1 keV, einem Strom von 100 nA auf einer Probenfläche von 300 x 300 µm² verwendet. Die Analyse erfolgte mit einem Ionenstrahl aus Bi₃⁺ mit 25 keV und einem Strom von 0,5 pA auf einer Fläche von 100 x 100 µm². Die Polarität war positiv. Das resultierende Spektrum ist in Figur 3 zu sehen.

Einen Vergleich der Maxima der relativen Intensitäten des erfindungsgemäßen Beispiels 1 und des Vergleichbeispiels 2 finden sich in Tabelle 1.

**Tabelle 1: Vergleich der relativen Intensitätsmaxima von Fluor als Cs₂F⁺ des erfindungsgemäßen Beispiels 1 und des Vergleichbeispiels 2**

| Beispiel | Relative Intensität (Maxima) |
|---|---|
| Beispiel 1 | 10⁵ |
| Vergleichsbeispiel 2 | 10⁴ |

Aus Tabelle 1 ergibt sich eine um den Faktor 10 höhere Signalintensität für Fluor im erfindungsgemäßen Beispiel 1 als im Vergleichsbeispiel 2. Somit ist auf der Scheibenoberfläche (1) einer nach dem erfindungsgemäßen Verfahren hergestellten Scheibe (3) (Beispiel 1) durch den Ätzvorgang ein höherer Anteil Fluor gebunden, als bei einer nach dem Stand der Technik gefertigten Vergleichsscheibe (3) (Vergleichsbeispiel 2) aus dem gleichen Grundmaterial.

## Patentansprüche

1. Verfahren zur Herstellung einer reflexionsverminderten Scheibe (3) wobei:
a. die Scheibe mit einer Lösung aus H₂SiF₆ und (SiO₂)ₘ*nH₂O geätzt wird, wobei die Konzentration an kolloidal-gelösten (SiO₂)ₘ*nH₂O bis zu 3 mmol über der (SiO)m*nH₂O Sättigungskonzentration beträgt.
b. die geätzte Scheibe auf eine Temperatur von 500 °C bis 800 °C erwärmt wird und
c. die erwärmte, geätzte Scheibe innerhalb von 30 s bis 150 s mit einem kalten Luftstrahl auf eine Temperatur von 25 °C bis 70 °C abgekühlt wird.

2. Verfahren nach Anspruch 1, wobei die Scheibenoberfläche (1) durch Aufbringen und/oder Aufsprühen einer Lösung einer Säure und/oder Base geätzt wird.

3. Verfahren nach Anspruch 1, wobei die Scheibe (3) durch Eintauchen in eine Lösung einer Säure und/oder Base geätzt wird.

4. Verfahren nach einem der Ansprüche 1 bis 3, wobei die Scheibe mit HF, H₂SiF₆, (SiO₂)ₘ*nH₂O, HCl, H₂SO₄, H₃PO₄, HNO₃, CF₃COOH, CCl₃COOH, HCOOH, CH₃COOH, NaOH, KOH, Ca(OH)₂ und/oder Gemischen davon geätzt wird.

5. Verfahren nach einem der Ansprüche 1 bis 4, wobei die geätzte Scheibe auf 550 °C bis 650 °C erwärmt wird.

6. Verfahren nach einem der Ansprüche 1 bis 5, wobei die erwärmte, geätzte Scheibe innerhalb von 50 s bis 90 s abgekühlt wird.

## Claims

1. Method of producing a reflection-reduced pane (3), wherein:
a. the pane is etched with a solution of H₂SiF₆ und (SiO₂)ₘ*nH₂O,
wherein the concentration of colloidally dissolved (SiO₂)ₘ*nH₂O is as much as 3 mmol above the (SiO₂)ₘ*nH₂O saturation concentration,
b. the etched pane is heated to a temperature of 500 °C to 800 °C, and
c. the heated, etched pane is cooled to a temperature of 25 °C to 70 °C within 30 s to 150 s with a cold air jet.

2. Method according to claim 1, wherein the surface of the pane (1) is etched by applying and/or spraying a solution of an acid and/or a base.

3. Method according to claim 1, wherein the pane (3) is etched by dipping into a solution of an acid and/or a base.

4. Method according to one of claims 1 through 3, wherein the pane is etched with HF, H₂SiF₆, (SiO₂)m*nH₂O, HCl, H₂SO₄, H₃PO₄, HNO₃, CF₃COOH, CCl₃COOH, HCOOH, CH₃COOH, NaOH, KOH, Ca(OH)₂, and/or mixtures thereof.

5. Method according to one of claims 1 through 4, wherein the etched pane is heated to 550°C to 650°C.

6. Method according to one of claims 1 through 5, wherein the heated, etched pane is cooled within 50 s to 90 s.

## Revendications

1. Procédé de fabrication d'une dalle (3) à réflexion réduite, dans lequel :
a. la dalle est attaquée par une solution de H₂SiF₆ et de (SiO₂)ₘ*nH₂O, la concentration de (SiO₂)ₘ*nH₂O en solution colloïdale étant jusqu'à 3 mmoles supérieure à la concentration de saturation de (SiO₂)ₘ*nH₂O;
b. la dalle attaquée est portée à une température de 500°C à 800°C; et
c. la dalle attaquée et chauffée est refroidie à l'aide d'un jet d'air froid à une température de 25°C à 70°C sur une période de 30 s à 150 s.

2. Procédé selon la revendication 1, dans lequel la surface de la dalle (1) est attaquée par application et/ou pulvérisation d'une solution d'un acide et/ou d'une base.

3. Procédé selon la revendication 1, dans lequel la dalle (3) est attaquée par immersion dans une solution d'un acide et/ou d'une base.

4. Procédé selon l'une des revendications 1 à 3, dans lequel la dalle est attaquée à l'aide de HF, H₂SiF₆, (SiO₂)ₘ*nH₂O, HCl, H₂SO₄, H₃PO₄, HNO₃, CF₃COOH, CCl₃COOH, HCOOH, CH₃COOH, NaOH, KOH, Ca(OH)₂ et/ou de mélanges de ceux-ci.

5. Procédé selon l'une des revendications 1 à 4, dans lequel la dalle attaquée est chauffée à une température de 550°C à 650°C.

6. Procédé selon l'une des revendications 1 à 5, dans lequel la dalle attaquée et chauffée est refroidie sur une période de 50 s à 90 s.
